# EUROPEAN PATENT SPECIFICATION

(11) **EP 3 862 967 B1**
(45) Date of publication and mention of the grant of the patent: **08.01.2025**
(21) Application number: 18936035.7
(22) Date of filing: 04.10.2018
(51) Int. Cl.: G06T 7/00, G06T 7/254

(54) **LEARNING DEVICE, IMAGE PROCESSING DEVICE, LEARNING METHOD, IMAGE PROCESSING METHOD, LEARNING PROGRAM, AND IMAGE PROCESSING PROGRAM**
LERNVORRICHTUNG, BILDVERARBEITUNGSVORRICHTUNG, LERNVERFAHREN, BILDVERARBEITUNGSVERFAHREN, LERNPROGRAMM UND BILDVERARBEITUNGSPROGRAMM
DISPOSITIF D'APPRENTISSAGE, DISPOSITIF DE TRAITEMENT D'IMAGE, PROCÉDÉ D'APPRENTISSAGE, PROCÉDÉ DE TRAITEMENT D'IMAGE, PROGRAMME D'APPRENTISSAGE ET PROGRAMME DE TRAITEMENT D'IMAGE

(43) Date of publication of application: 11.08.2021
(73) Proprietor: NEC Corporation, 108-8001 Tokyo (JP)
(72) Inventor: KANEKO Eiji, Tokyo 108-8001 (JP); TODA Masato, Tokyo 108-8001 (JP)
(74) Representative: Betten & Resch
(86) International application number: PCT/JP2018/037181
(87) International publication number: WO 2020/070852

(56) References cited:
- JP-A- 2017 033 197
- JP-A- H10 269 347
- JP-B2- 6 397 379
- L. BRUZZONE ET AL.: "A Novel Framework for the Design of Change-Detection Systems for Very-High-Resolution Remote Sensing Images", PROC. IEEE, vol. 101, no. 3, March 2013 (2013-03-01), pages 609 - 630, XP011494139, Retrieved from the Internet <URL:https://ieeexplore.ieee.org/stamp/stamp.jsp?arnumber=6248151> DOI: 10.1109/JPROC.2012.2197169

## Description

### Technical Field

The present invention relates to a learning device, a learning method and a learning program.

### Background Art

In order to understand the damage caused by disasters, such as floods, forest fires, volcanic eruptions, earthquakes, tsunamis, droughts, and the like, or urban development, a change detection technique for detecting an area in which the condition of the ground surface has changed, on the basis of an image photographed from a high place, such as a satellite image, has been developed.

Examples of the above change detection technique are disclosed in Non Patent Literature(NPL) 1 and NPL 2. NPL 1 discloses a technique for individually correcting a photographed image as a preprocess. In addition, NPL 2 discloses a technique for masking (hiding), among detected areas in which the condition of the ground surface has changed, an area in which a change other than a change of a detection target has occurred.

In addition, NPL 3 discloses a method of computing a component of the sunlight spectrum from the solar zenith angle.

In addition, as networks usable for machine learning, a convolutional neural network (CNN) is disclosed in NPL 4, a sparse auto encoder (SAE) is disclosed in NPL 5, and a deep belief network (DBN) is disclosed in NPL 6. Patent document JP6397379 B2 discloses to use a classifier for aerial images change detection, trained to discard irrelevant changes.

### Citation List

### Non Patent Literature

NPL 1: R. Richter, and A. Muller, "De-shadowing of satellite/airborne imagery," Intl. Journal of Remote Sens., Vol. 26, No. 15, Taylor & Francis, pp. 3137-3148, Aug 2005.
NPL 2: L. Bruzzone and F. Bovolo, "A Novel Framework for the Design of Change-Detection Systems for Very-High-Resolution Remote Sensing Images," Proc. IEEE, Vol. 101, No. 3, pp. 609-630, Mar 2013.
NPL 3: Richard E. Bird and Carol Riordan, "Simple Solar Spectral Model for Direct and Diffuse Irradiance on Horizontal and Tilted Planes at the Earth's Surface for Cloudless Atmospheres," Journal of climate and applied meteorology, American Meteorological Society, pp. 87-97, Jan 1986.
NPL 4: A. Krizhevsky, I. Sutskever, and G. E. Hinton, "ImageNet Classification with Deep Convolutional Neural Networks," in Proc. Adv. Neural Inf. Process. Syst., pp. 1097-1105, 2012.
NPL 5: F. Zhang, B. Du, and L. Zhang, "Saliency-Guided Unsupervised Feature Learning for Scene Classification," IEEE Trans. Geosci. Remote Sens., Vol. 53, No. 4, pp. 2175-2184, Apr 2015.
NPL 6: G. E. Hinton, S. Osindero, and Y-W. Teh, "A fast learning algorithm for deep belief nets," Neural Comput., Vol. 18, No. 7, pp. 1527-1554, 2006.

### Summary of Invention

### Technical Problem

However, the above change detection technologies have a problem that changes of non-detection targets that are not related to damage or urban development, for example, changes due to sunshine conditions such as the presence/absence of shadow, changes of atmospheric conditions such as clouds and fog, and seasonal changes of plants is detected together with a change of a detection target.

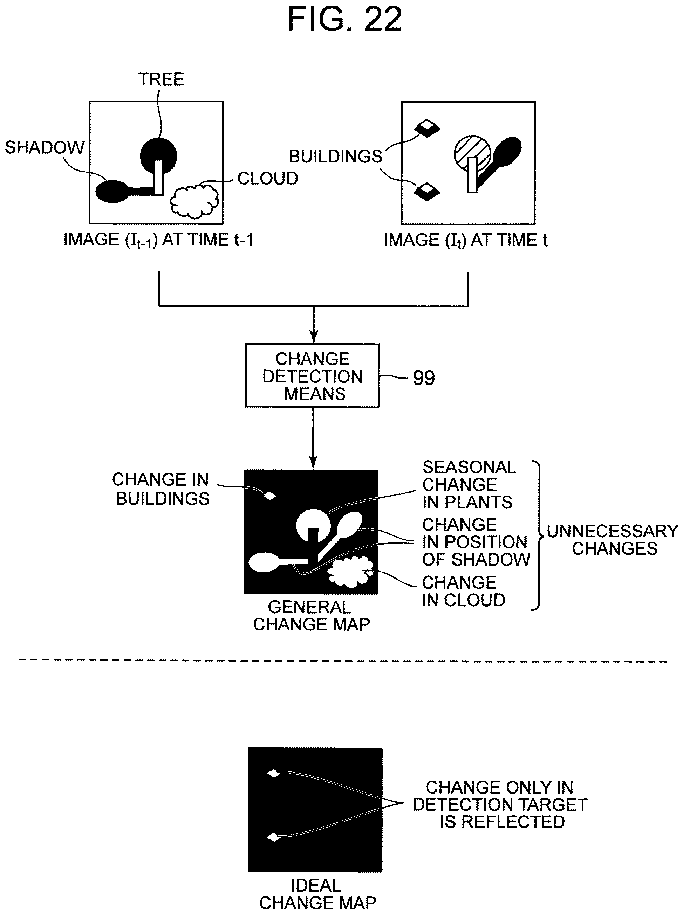

The above problem will be described with reference to FIG. 22. FIG. 22 is an explanatory diagram showing an example of generating a change map from two images. The upper of FIG. 22 shows an example in which the above change detection technique detects changes of non-detection targets together with a change of a detection target.

As shown in the upper of FIG. 22, a change detection means 99 to which the above change detection technique is applied receives input of an image Iₜ₋₁ photographed at a time (t-1) and an image Iₜ photographed at a time t. Note that, the image Iₜ₋₁ and the image Iₜ are photographed images of the same area.

As shown in the upper of FIG. 22, the image Iₜ₋₁ shows a tree, a shadow of the tree, and a cloud. The image Iₜ shows a tree, a shadow of the tree, and buildings. Compared to the contents shown in the image Iₜ₋₁, the contents shown in the image Iₜ have differences that "the position of the shadow of the tree has changed", "the color of the leaves of the tree has changed", "there is no cloud", and "there are buildings".

Of the above differences, the only difference of the detection target is "there are buildings". However, if no settings for detecting changes are made, the change detection means 99 reflects all the differences between the image Iₜ₋₁ and the image Iₜ in the change map.

In the change map shown in FIG. 22, an area in which a change has detected is shown in white, and an area in which a change has not detected is shown in black. Thus, in a general change map shown in the upper of FIG. 22, all the changes of not only a change of the buildings corresponding to "there are buildings" but also a change of the position of the shadow corresponding to "the position of the shadow of the tree has changed", a seasonal change of plants corresponding to "the color of leaves of the tree has changed", and a change of clouds corresponding to "there is no cloud" are reflected.

As described above, the change of the position of the shadow, the seasonal change of plants, and the change of clouds are unnecessary changes that should not be reflected in the change map. The lower of FIG.22 shows an ideal change map with unnecessary changes removed from the general change map.

In the ideal change map shown in the lower of FIG. 22, only a change of the buildings corresponding to "there are buildings" is reflected. That is, a change only of the detection target is reflected in the change map.

As described above, a technique for detecting, from a plurality of images with different photographing times, a change only of a detection target without detecting changes of non-detection targets, such as changes due to sunshine conditions, changes of atmospheric conditions, seasonal changes of forest, and the like is desired. NPL 1 to NPL 6 do not disclose techniques capable of detecting a change only of a detection target.

In view of the above, a purpose of the present invention is to provide a learning device, a learning method and a learning program that solve the above problem and are capable of detecting, among changes between a plurality of images with different photographing times, a change only of a detection target.

### Solution to Problem

A learning device according to the present invention is specified in claim 1.

A learning method according to the present invention is specified in claim 6.

A learning program according to the present invention is specified in claim 7.

### Advantageous Effects of Invention

According to the present invention, it is possible to detect, among changes between a plurality of images with different photographing times, a change only of a detection target.

### Brief Description of Drawings

[FIG. 1] FIG. 1 is a block diagram showing a configuration example of a general image processing device 910.
[FIG. 2] FIG. 2 is an explanatory diagram showing an example in which the image processing device 910 generates a change map.
[FIG. 3] FIG. 3 is a block diagram showing a configuration example of a general image processing device 920.
[FIG. 4] FIG. 4 is an explanatory diagram showing an example in which the image processing device 920 generates a change map.
[FIG. 5] FIG. 5 is a block diagram showing a configuration example of an image processing device according to a first example useful for understanding but not pertaining to the invention as claimed.
[FIG. 6] FIG. 6 is a block diagram showing a configuration example of a change detection means 130.
[FIG. 7] FIG. 7 is an explanatory diagram showing an example in which the change detection means 130 computes a feature value of a change with no unnecessary changes.
[FIG. 8] FIG. 8 is an explanatory diagram showing examples of model parameters computed by a model-parameter computation means 131.
[FIG. 9] FIG. 9 is an explanatory diagram showing a computation example of a feature value of a change not including a change of the position of a shadow.
[FIG. 10] FIG. 10 is an explanatory diagram showing an example of generating a change map and a reliability map.
[FIG. 11] FIG. 11 is an explanatory diagram showing an example of generating a data set.
[FIG. 12] FIG. 12 is a flowchart showing an operation of a change map and reliability map generation process by an image processing device 100 according to the first example.
[FIG. 13] FIG. 13 is a flowchart showing an operation of a data set generation process by the image processing device 100 according to the first example.
[FIG. 14] FIG. 14 is a block diagram showing a configuration example of a learning device according to a second exemplary embodiment of the present invention.
[FIG. 15] FIG. 15 is an explanatory diagram showing an example in which a learning device 200 causes a device to learn a process of detecting only a change other than unnecessary changes.
[FIG. 16] FIG. 16 is a flowchart showing an operation of a learning process by the learning device 200 according to the second exemplary embodiment.
[FIG. 17] FIG. 17 is an explanatory diagram showing a hardware configuration example of the image processing device 100 according to the first example.
[FIG. 18] FIG. 18 is an explanatory diagram showing a hardware configuration example of the learning device 200 according to the present invention.
[FIG. 19] FIG. 19 is a block diagram showing an outline of a learning device according to the present invention.
[FIG. 20] FIG. 20 is a block diagram showing an outline of an image processing device according to the first example.
[FIG. 21] FIG. 21 is a block diagram showing another outline of the image processing device according to the first example.
[FIG. 22] FIG. 22 is an explanatory diagram showing an example of generating a change map from two images.

### Description of Embodiments

First, the reason why it is difficult for the technique disclosed in each of NPL 1 and NPL 2 to detect a change only of a detection target will be described with reference to the drawings.

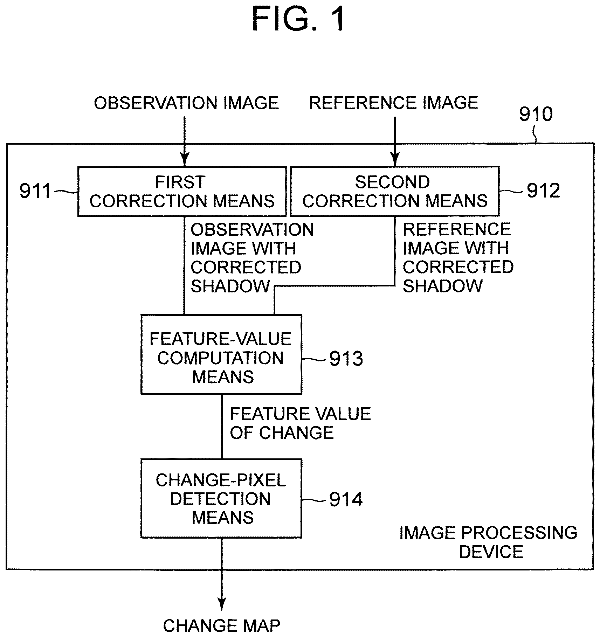

FIG. 1 is a block diagram showing a configuration example of a general image processing device 910. The technique disclosed in NPL 1 is applied to the image processing device 910 shown in FIG. 1. As shown in FIG. 1, the image processing device 910 includes a first correction means 911, a second correction means 912, a feature-value computation means 913, and a change-pixel detection means 914.

The first correction means 911 has a function of correcting a shadow in an input observation image. The second correction means 912 has a function of correcting a shadow in an input reference image. The first correction means 911 and the second correction means 912 each correct a shadow in such a manner as to satisfy a hypothetical condition of "the reflectance of the shadow is 0, and there is no water area".

The feature-value computation means 913 has a function of computing a feature value of a change. The feature value indicates the degree of a change between an observation image with corrected shadow and a reference image with corrected shadow. The change-pixel detection means 914 has a function of detecting a change pixel on the basis of the computed feature value of a change to generate a change map on the basis of the detected change pixel.

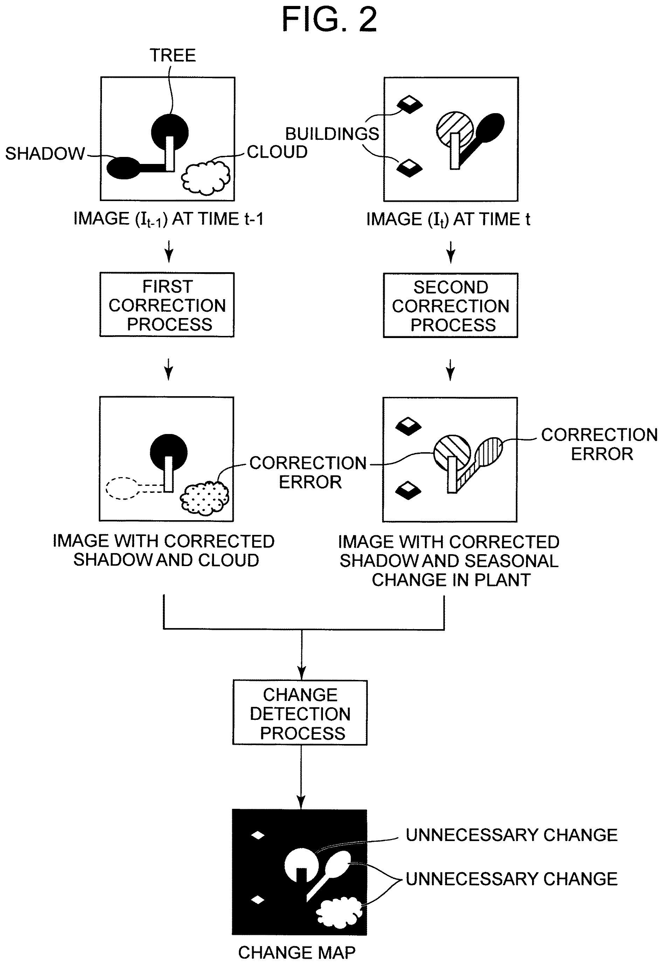

FIG. 2 is an explanatory diagram showing an example in which the image processing device 910 generates a change map. In the example shown in FIG. 2, an image Iₜ₋₁ photographed at a time (t-1) is firstly input to the first correction means 911. In addition, an image Iₜ photographed at a time t is input to the second correction means 912. Note that, the image Iₜ₋₁ and the image Iₜ are similar to the image Iₜ₋₁ and the image Iₜ shown in FIG. 22, respectively.

As shown in FIG. 2, the first correction means 911 performs a first correction process of erasing the shadow in the input image Iₜ₋₁. However, as shown in FIG. 2, the cloud is corrected as well as the shadow in the image Iₜ₋₁ that has been subjected to the first correction process. The correction of the cloud is a correction caused by a correction error by the first correction means 911. The correction error is caused because the first correction means 911 has corrected the shadow in such a manner as to satisfy the hypothetical condition.

In addition, as shown in FIG. 2, the second correction means 912 performs a second correction process of erasing the shadow in the input image Iₜ. However, as shown in FIG. 2, the shadow is not completely erased, and a seasonal change of the plant is also corrected in the image Iₜ that has been subjected to the second correction process. Both corrections are caused by correction errors by the second correction means 912. The correction error is caused because the second correction means 912 has corrected the shadow in such a manner as to satisfy the hypothetical condition.

The feature-value computation means 913 computes a feature value of a change between the image Iₜ₋₁ with the correction error and the image Iₜ with the correction error. The change-pixel detection means 914 detects a change pixel on the basis of the computed feature value of the change to generate a change map on the basis of the detected change pixel.

In the change map generated through a change detection process by the image processing device 910, unnecessary changes, such as the change of the position of the shadow, the seasonal change of the plant, and the change of the cloud, caused by the correction error are reflected as shown in FIG. 2.

As described above, the image processing device 910 has a problem of limited conditions that can be satisfied without causing a correction error in a correction process. Furthermore, some conditions cannot be satisfied in a correction process, which is another problem that each correction means of the image processing device 910 cannot always correct shadows properly.

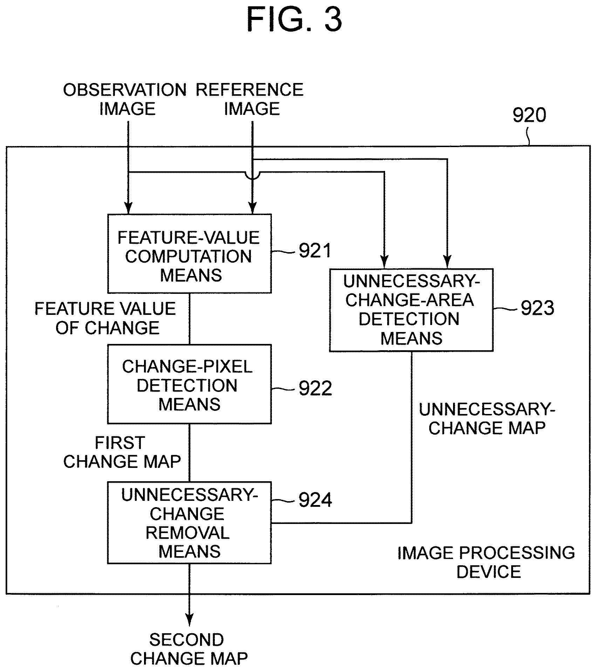

FIG. 3 is a block diagram showing a configuration example of a general image processing device 920. The technique disclosed in NPL 2 is applied to the image processing device 920 shown in FIG. 3. As shown in FIG. 3, the image processing device 920 includes a feature-value computation means 921, a change-pixel detection means 922, an unnecessary-change-area detection means 923, and an unnecessary-change removal means 924.

The feature-value computation means 921 has a function of computing a feature value of a change between an observation image and a reference image. The change-pixel detection means 922 has a function of detecting a change pixel on the basis of the computed feature value of the change to generate a first change map on the basis of the detected change pixel.

The unnecessary-change-area detection means 923 has a function of detecting, as an unnecessary change area, an area in which a change of non-detection targets has occurred between the observation image and the reference image. The unnecessary-change-area detection means 923 generates an unnecessary-change map representing the detected unnecessary change area. The unnecessary-change removal means 924 has a function of detecting the difference between the first change map and the unnecessary-change map to generate a second change map.

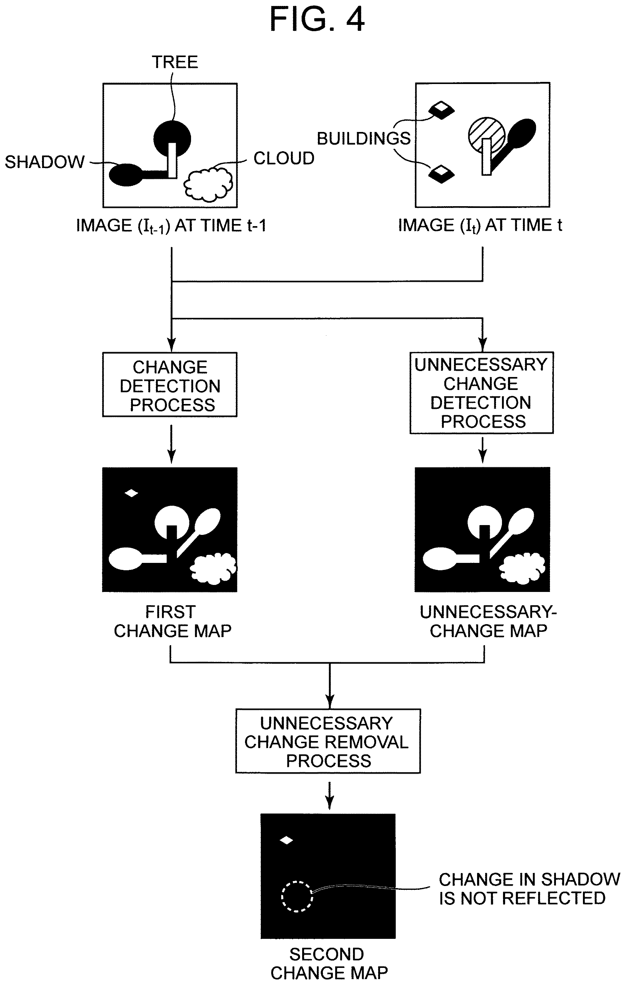

FIG. 4 is an explanatory diagram showing an example in which the image processing device 920 generates a change map. In the example shown in FIG. 4, an image Iₜ₋₁ photographed at a time (t-1) and an image Iₜ photographed at a time t are firstly input to the feature-value computation means 921 and the unnecessary-change-area detection means 923. Note that, the image Iₜ₋₁ and the image Iₜ are similar to the image Iₜ₋₁ and the image Iₜ shown in FIG. 22, respectively.

The feature-value computation means 921 computes a feature value of a change between the image Iₜ₋₁ and the image Iₜ. The change-pixel detection means 922 detects a change pixel on the basis of the computed feature value of the change to generate a first change map on the basis of the detected change pixel.

As shown in FIG. 4, in the first change map generated through a change detection process by the change-pixel detection means 922, all the changes are reflected similarly to those in the general change map shown in the upper of FIG. 22.

In addition, as shown in FIG. 4, the unnecessary-change-area detection means 923 detects an unnecessary change area between the image Iₜ₋₁ and the image Iₜ and performs an unnecessary change detection process to generate an unnecessary-change map representing the detected unnecessary change area. As shown in FIG. 4, in the unnecessary-change map generated through the unnecessary change detection process by the unnecessary-change-area detection means 923, changes only of the non-detection target are reflected.

The unnecessary-change removal means 924 performs an unnecessary change removal process to generate a second change map by subtracting the unnecessary-change map from the first change map.

Theoretically, a change only of the detection target is to be reflected in the second change map generated after the unnecessary change removal process by the unnecessary-change removal means 924. However, as shown in FIG. 4, the change of the building that had occurred in the shadow of the tree is not reflected in the second change map.

This is because an algorithm that simply removes all the areas in which a change of a shadow occurs is applied to the image processing device 920. That is, the image processing device 920 has a problem that a change of a shadow cannot be detected.

As described above, it is difficult for the technique disclosed in each of NPL 1 and NPL 2 to detect a change only of a detection target. For the above reason, the present invention is to provide a learning device and an image processing device that cause a detector to detect a change only of a detection target with high accuracy and also to detect a change of a shadow.

### First example:

### [Description of Configuration]

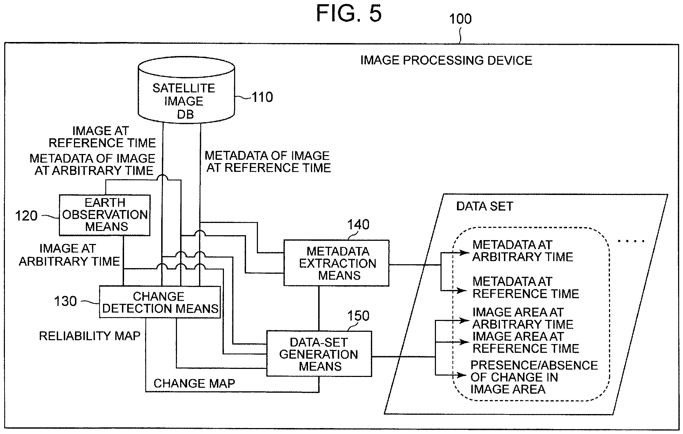

Hereinafter, exemplary embodiments of the present invention will be described with reference to the drawings. FIG. 5 is a block diagram showing a configuration example of an image processing device according to a first example useful for understanding but not pertaining to the invention as claimed.

An image processing device 100 according to the present example detects a change between images photographed at two different times and a change between metadata of the images. After detecting the change, the image processing device 100 generates a change map and a reliability map indicating the degree of reliability of each pixel.

Then, the image processing device 100 extracts, on the basis of the generated reliability map, an area corresponding to the periphery of a reliable pixel from each of the two images and the change map and combines the extracted areas with the metadata to generate a data set. The generated data set is used for learning to detect a change only of a detection target.

As shown in FIG. 5, the image processing device 100 includes a satellite image database (DB) 110, an earth observation means 120, a change detection means 130, a metadata extraction means 140, and a data-set generation means 150.

The satellite image DB 110 stores a reference image photographed by an artificial satellite and metadata of the reference image. The satellite image DB 110 outputs an image photographed at a reference time and the metadata of the image photographed at the reference time.

The earth observation means 120 has a function of photographing the condition of the ground surface of an observation target. The earth observation means 120 outputs an image photographed at an arbitrary time and the metadata of the image photographed at the arbitrary time.

The metadata of an image indicates the photographing condition when the image is photographed. The metadata of the image includes, for example, data indicating the position of the artificial satellite at the photographing time and data indicating the direction of the antenna used for photographing.

The change detection means 130 has a function of generating a change map and a reliability map on the basis of the image photographed at the reference time, the metadata of the image photographed at the reference time, the image photographed at the arbitrary time, and the metadata of the image photographed at the arbitrary time.

For example, the change detection means 130 limits using model parameters, the range of the spectrum that changes in accordance with conditions causing unnecessary changes. The model parameters, which will be described later, are computed from the metadata indicating the solar zenith angle, the date and time, and the like.

The unnecessary changes include changes due to sunshine conditions, changes of atmospheric conditions, seasonal changes of forests, and the like as described above. That is, it can be said that the unnecessary changes in the present exemplary embodiment are periodic changes in accordance with the photographing environment.

By limiting the range of the spectrum, the change detection means 130 computes a feature value of a change indicating the degree of a change with no unnecessary changes. Then, the change detection means 130 detects a change pixel on the basis of the computed feature value of the change. The change detection means 130 classifies the detected change pixel and also computes the reliability of the detection for each pixel.

The metadata extraction means 140 has a function of extracting metadata required for a data set from the metadata of the image photographed at the reference time and the metadata of the image photographed at the arbitrary time.

The data-set generation means 150 has a function of generating a data set to be used for learning, on the basis of the generated change map and reliability map, the image photographed at the reference time, and the image photographed at the arbitrary time.

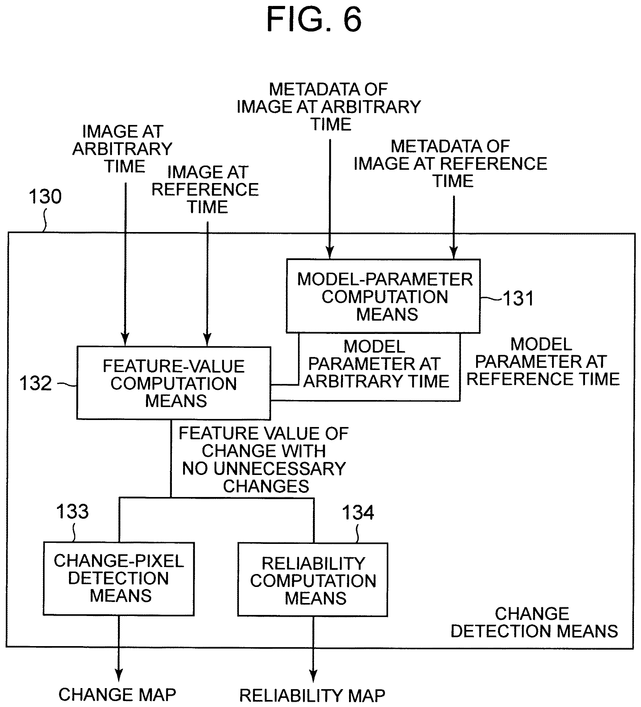

FIG. 6 is a block diagram showing a configuration example of the change detection means 130. As shown in FIG. 6, the change detection means 130 includes a model-parameter computation means 131, a feature-value computation means 132, a change-pixel detection means 133, and a reliability computation means 134.

The model-parameter computation means 131 has a function of computing a model parameter at the arbitrary time on the basis of the metadata of the image photographed at the arbitrary time and computing a model parameter at the reference time on the basis of the metadata of the image photographed at the reference time.

The model parameters in the present example are environment data indicating the state of a periodic change at a photographing time and data about an object. That is, the model-parameter computation means 131 computes a model parameter representing the state of a periodic change on the basis of the metadata of an image.

The feature-value computation means 132 has a function of computing a feature value of the change with no unnecessary changes, on the basis of the image photographed at the reference time, the image photographed at the arbitrary time, and the computed model parameters.

The change-pixel detection means 133 has a function of generating a change map on the basis of the computed feature value of the change with no unnecessary changes. The reliability computation means 134 has a function of generating a reliability map on the basis of the computed feature value of the change with no unnecessary changes.

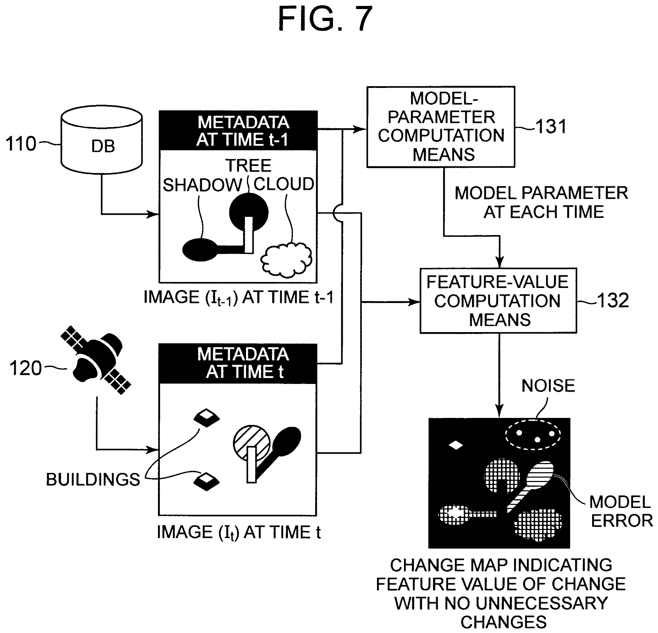

In the following, an example in which the image processing device 100 generates a data set will be described with reference to the drawings. FIG. 7 is an explanatory diagram showing an example in which the change detection means 130 computes a feature value of a change with no unnecessary changes.

As shown in FIG. 7, in this example, the satellite image DB 110 outputs an image Iₜ₋₁ photographed at a time (t-1) and the metadata of the image Iₜ₋₁. In addition, the earth observation means 120 outputs an image Iₜ photographed at a time t and the metadata of the image Iₜ. Note that, the image Iₜ₋₁ and the image Iₜ are similar to the image Iₜ₋₁ and the image Iₜ shown in FIG. 22, respectively.

The model-parameter computation means 131 computes a model parameter at the time (t-1) on the basis of the metadata of the image Iₜ₋₁. The model-parameter computation means 131 further computes a model parameter at the time t on the basis of the metadata of the image Iₜ.

An example of computing model parameters by the model-parameter computation means 131 is described below. The model-parameter computation means 131 uses, for example, the solar zenith angle θ indicated by the metadata and the latitude and longitude of the point indicated by the image as input to compute, in accordance with a radiation transmission model of the atmosphere, a direct light component of the sunlight spectrum (hereinafter, also referred to as a direct component) sa and a scattered light component (hereinafter, also referred to as a scattered component) sₛ as follows.$\left[{s}_{d , t}, {s}_{s , t}\right] = {f}_{Bird} \left({θ}_{t}\right) , \left[{s}_{d , t - 1}, {s}_{s , t - 1}\right] = {f}_{Bird} \left({θ}_{t - 1}\right)$

The subscript t in Expression (1) indicates that the data is at the time t. Similarly, the subscript t-1 indicates that the data is at the time (t-1). The function f_{Bird} in Expression (1) is the function disclosed in NPL 3. In addition, the direct component sa and the scattering component sₛ are vectors.

The computed direct component sa and scattering component sₛ of the sunlight spectrum represent the state of sunlight at the photographing time. In addition, the direct component s_{d} and scattering component sₛ of the sunlight spectrum suggest how the image changes due to shadows.

The model-parameter computation means 131 may further compute the solar zenith angle θ from, for example, the date and time, indicated by the metadata, when the image was photographed and from the latitude and longitude of the point indicated by the image. The model-parameter computation means 131 may further compute the solar azimuth angle together with the solar zenith angle θ.

The model-parameter computation means 131 may further compute, for example, the zenith angle of the artificial satellite having photographed the image. The model-parameter computation means 131 may further compute the azimuth angle of the artificial satellite together with the zenith angle of the artificial satellite.

The model-parameter computation means 131 may further use, for example, the date and time, indicated by the metadata, when the image was photographed and the latitude and longitude of the point indicated by the image as input to compute, in accordance with a model of a seasonal change of plants, the spectrum of vegetation in the season when the image was photographed. The model-parameter computation means 131 may further compute, together with the spectrum of vegetation, a normalized difference vegetation index (NDVI), which is a kind of vegetation index, and the CO₂ absorption amount.

Each computed information represents the state of vegetation at the photographing time. In addition, each computed information suggests how the forest changes seasonally. The model-parameter computation means 131 may compute each information for each pixel together with a map showing the plant community.

The model-parameter computation means 131 may further use, for example, the solar azimuth angle and observation azimuth angle indicated by the metadata as input to compute the solar azimuth angle relative to the image in accordance with a geometric model.

The solar azimuth angle relative to the image is information indicating the direction in which a shadow is formed at the photographing time. The model-parameter computation means 131 may use the solar azimuth angle relative to the image and the solar zenith angle as information suggesting the direction in which a shadow is formed and the length of the shadow.

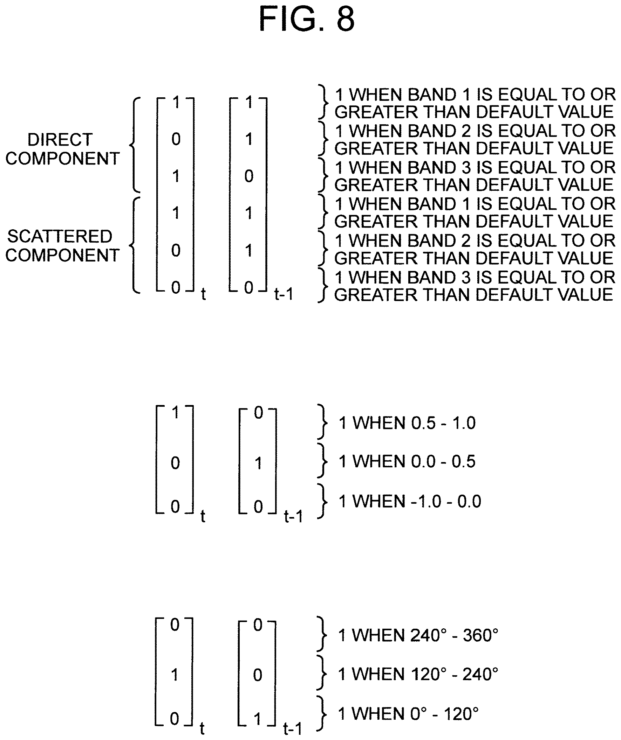

FIG. 8 is an explanatory diagram showing examples of the model parameters computed by the model-parameter computation means 131. The subscript t of each vector shown in FIG. 8 indicates that the data is at the time t. Similarly, the subscript t-1 of each vector shown in FIG. 8 indicates that the data is at the time (t-1).

The upper of FIG. 8 shows vectors representing the state of the direct component s_{d} and the state of the scattering component sₛ of the sunlight spectrum. When each condition shown in the upper of FIG. 8 is satisfied, each component of the vectors becomes 1. The "band" in each condition shown in the upper of FIG. 8 means a band spectrum.

Alternatively, the model-parameter computation means 131 may directly compute a vector representing the intensity of each wavelength instead of the vector representing the state of a component of the sunlight spectrum.

The middle of FIG. 8 shows vectors representing the state of the NDVI of a plant. The components of the vectors to be 1 are determined according to which range shown in the middle of FIG. 8 the value of the NDVI falls into. The model-parameter computation means 131 may directly compute the scalar representing the value of the NDVI instead of the vector representing the state of the NDVI of the plant.

The lower of FIG. 8 shows vectors representing the state of the solar azimuth angle relative to the image at the photographing time. The components of the vectors to be 1 are determined according to which range shown in the lower of FIG. 8 the value of the solar azimuth angle falls into. The model-parameter computation means 131 may directly compute the scalar representing the solar azimuth angle instead of the vector representing the state of the relative solar azimuth angle.

As described above, the model-parameter computation means 131 computes, on the basis of the data indicating the photographing condition of each of a plurality of images, a parameter representing a periodic change of a predetermined object displayed in the plurality of images. The model-parameter computation means 131 inputs the computed model parameter at the time (t-1) and model parameter at the time t to the feature-value computation means 132.

The feature-value computation means 132 computes, on the basis of the image Iₜ₋₁, the image Iₜ, and the computed model parameter at the time (t-1) and model parameter at the time t, a feature value of a change with no unnecessary changes.

The feature-value computation means 132 computes, for each pixel, a feature value of a change with no unnecessary changes on the basis of, for example, a physical model. Then, the feature-value computation means 132 generates a change map indicating the feature value of the change with no unnecessary changes.

Regarding the areas of the change map shown in FIG. 7, an area where a change is larger has the color closer to white. The grid pattern area in the change map shown in FIG. 7 is an area where a change is not larger than the white area.

The white dots encircled by the broken-line ellipse in the change map shown in FIG. 7 are areas where changes have occurred due to noise. In addition, the horizontal-line-pattern area in the change map shown in FIG. 7 is an area where a change has occurred due to an error of the model itself (model error).

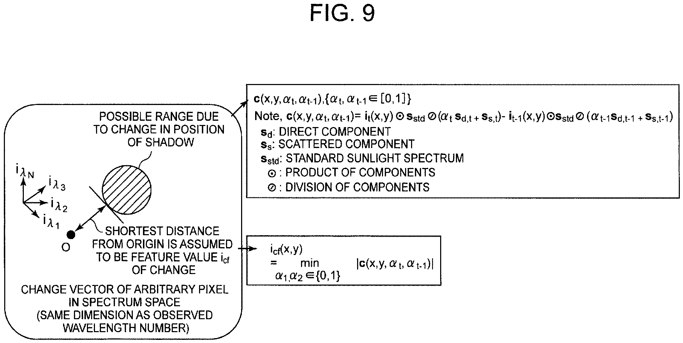

In the following, a computation example of a feature value of a change with no unnecessary changes will be described. FIG. 9 is an explanatory diagram showing a computation example of a feature value of a change not including a change of the position of a shadow. For example, the feature-value computation means 132 computes a change vector c of an arbitrary pixel in the spectral space having the same dimension as the observed wavelength number as shown in FIG. 9.

As shown in FIG. 9, the change vector c is computed using the direct component s_{d} and scattering component sₛ of the sunlight spectrum computed by the model-parameter computation means 131 and a standard sunlight spectrum s_{std}. The slant-line-pattern area shown in FIG. 9 represents the possible range of the change vector c due to a change of the position of a shadow.

The shortest distance from the origin to the change vector c is computed by the Expression shown in FIG. 9. The computed shortest distance corresponds to a feature value i_{cf} of the change not including a change of the position of the shadow.

As described above, the feature-value computation means 132 is capable of computing, using the model parameters computed by the model-parameter computation means 131 and a plurality of images, a feature value indicating the degree of a change in which a periodic change (for example, a change of the position of a shadow) is removed from changes between the plurality of images. Note that, the feature-value computation means 132 may compute a feature value of a change with no unnecessary changes by a method other than the method shown in FIG. 9.

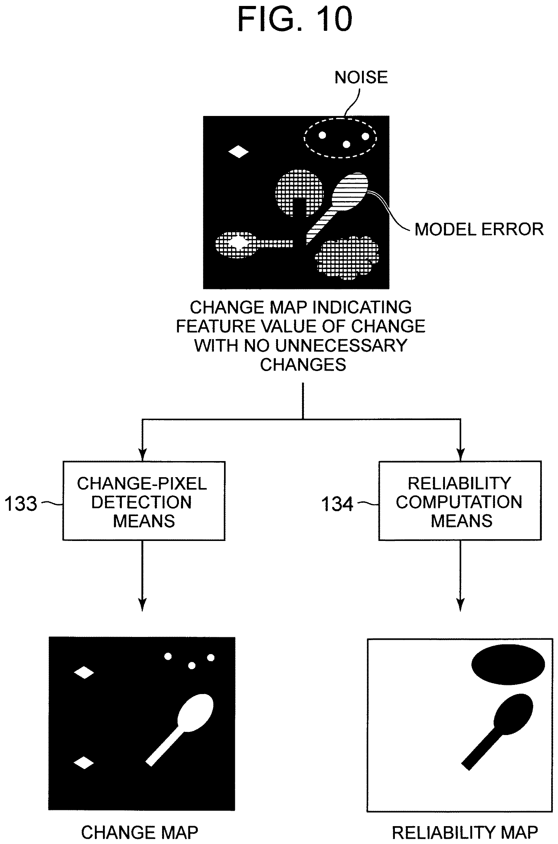

FIG. 10 is an explanatory diagram showing an example of generating a change map and a reliability map. The feature-value computation means 132 inputs the computed feature value of the change with no unnecessary changes to the change-pixel detection means 133 and the reliability computation means 134.

The change-pixel detection means 133 generates a change map by reflecting only a feature value of a change equal to or greater than a predetermined threshold among input feature values of changes. For example, in the change map shown in FIG. 10, a white area indicating a feature value of a change with no unnecessary changes in the change map and a horizontal-line-pattern area are represented as areas "with a change".

The reliability computation means 134 generates a reliability map by reflecting only the feature value of the change equal to or greater than the predetermined threshold among the input feature values of the changes. The reliability computation means 134 may further generate a reliability map by reflecting only a feature value of a change in which dispersion is equal to or less than a predetermined threshold among the input feature values of the changes. That is, the reliability computation means 134 computes the reliability of the feature value computed by the feature-value computation means 132.

In the reliability map shown in FIG. 10, an area with reliability is shown in white, and an area without reliability is shown in black. For example, in the reliability map shown in FIG. 10, areas determined as "with noise" and as "with a model error" on the basis of the feature value of the change with no unnecessary changes are represented as areas "without reliability".

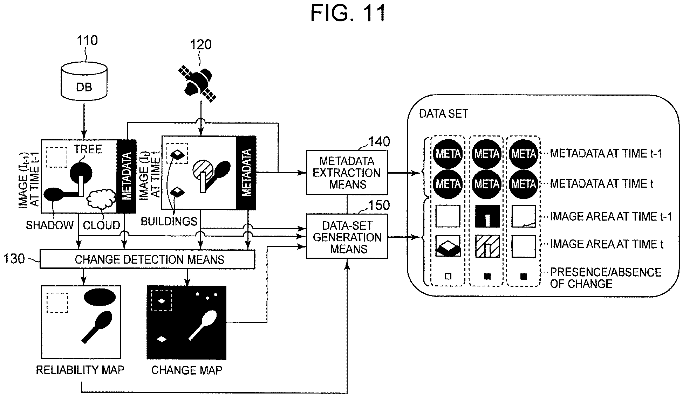

FIG. 11 is an explanatory diagram showing an example of generating a data set. The data-set generation means 150 extracts the value of the pixel in the change map corresponding to each pixel of the area determined as "with reliability" in the reliability map in association with the peripheral area of the pixel of the image at each time. The data-set generation means 150 may extract the value of the peripheral area of the corresponding pixel as the value of the change map.

In the example shown in FIG. 11, the data-set generation means 150 extracts the value of the area encircled by the broken-line rectangle in the change map corresponding to the area encircled by the broken-line rectangle in the reliability map as the value of the change map. Since the extracted value indicates "with a change", the presence/absence of a change in the data in the first row of the data set shown in FIG. 11 is represented by a white rectangle.

Note that, when the extracted value indicates "with no change", the presence/absence of a change is represented by a black rectangle. Alternatively, instead of the presence/absence of a change, the value of the change map itself may be included in the data.

The data-set generation means 150 further extracts the area encircled by the broken-line rectangle in the image Iₜ₋₁ in association with the area encircled by the broken-line rectangle in the image Iₜ. Note that, the data-set generation means 150 may extract the center pixel of the rectangle instead of the area encircled by the rectangle.

In addition, the metadata extraction means 140 extracts the metadata about the extracted area of the image Iₜ₋₁ and the metadata about the extracted area of the image Iₜ. The data-set generation means 150 generates each data in the data set shown in FIG. 11 by combining each extracted image area, each extracted metadata, and the presence/absence of the change. With the above processes, the data set shown in FIG. 11 is generated.

The change detection means 130 in the present exemplary embodiment generates change information (for example, a change map) indicating, for each pixel constituting an image, a plurality of feature values indicating the degree of a change in which a periodic change of a predetermined object is removed from changes between a plurality of images and reliability information (for example, a reliability map) indicating, for each pixel, reliability of each of the plurality of feature values.

Then, the data-set generation means 150 in the present example extracts, from the plurality of images, an area including a pixel corresponding to a feature value whose reliability indicated by the generated reliability information is equal to or greater than a predetermined value and extracts, from the generated change information, a feature value equal to or greater than the predetermined value. The data-set generation means 150 further generates learning data including each extracted area, the extracted feature value equal or greater than the predetermined value, and data indicating a photographing condition of each of the plurality of images associated with each other.

### [Description of Operation]

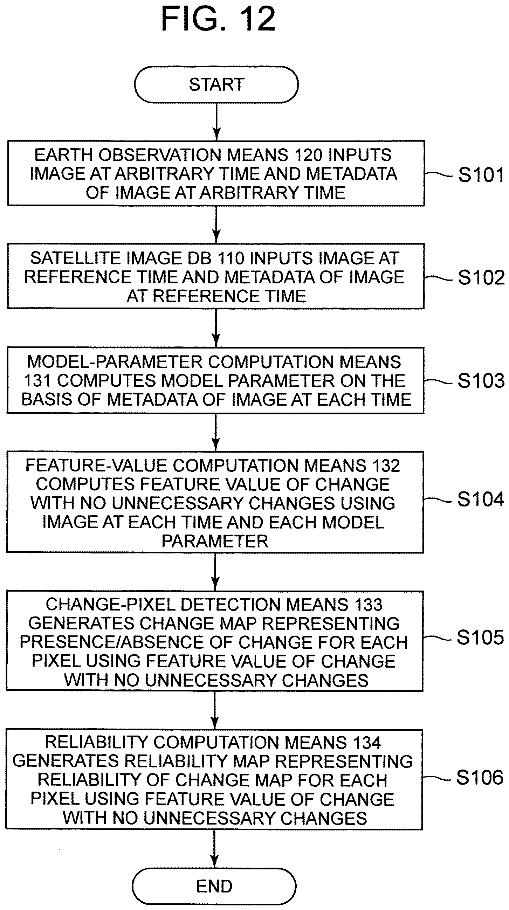

Hereinafter, the operation of generating a change map and a reliability map by the image processing device 100 according to the present example will be described with reference to FIG. 12. FIG. 12 is a flowchart showing the operation of a change map and reliability map generation process by the image processing device 100 according to the first example.

First, the earth observation means 120 inputs an image photographed at an arbitrary time and the metadata of the image photographed at the arbitrary time to the change detection means 130 (step S101).

Then, the satellite image DB 110 inputs an image photographed at a reference time and the metadata of the image photographed at the reference time to the change detection means 130 (step S102).

Then, the model-parameter computation means 131 computes a model parameter at the arbitrary time on the basis of the metadata of the image photographed at the arbitrary time. The model-parameter computation means 131 further computes a model parameter at the reference time on the basis of the metadata of the image photographed at the reference time (step S103). The model-parameter computation means 131 inputs the computed model parameters to the feature-value computation means 132.

Then, the feature-value computation means 132 computes a feature value of a change with no unnecessary changes using the image photographed at the reference time, the image photographed at the arbitrary time, and the model parameters computed in step S103 (step S104). The feature-value computation means 132 inputs the computed feature value to the change-pixel detection means 133 and the reliability computation means 134.

Then, the change-pixel detection means 133 generates a change map representing the presence/absence of a change for each pixel using the computed feature value of the change with no unnecessary changes (step S105).

Then, the reliability computation means 134 generates a reliability map representing the reliability of the change map generated in step S105 for each pixel using the computed feature value of the change with no unnecessary changes (step S106). After generating the reliability map, the image processing device 100 terminates the change map and reliability map generation process.

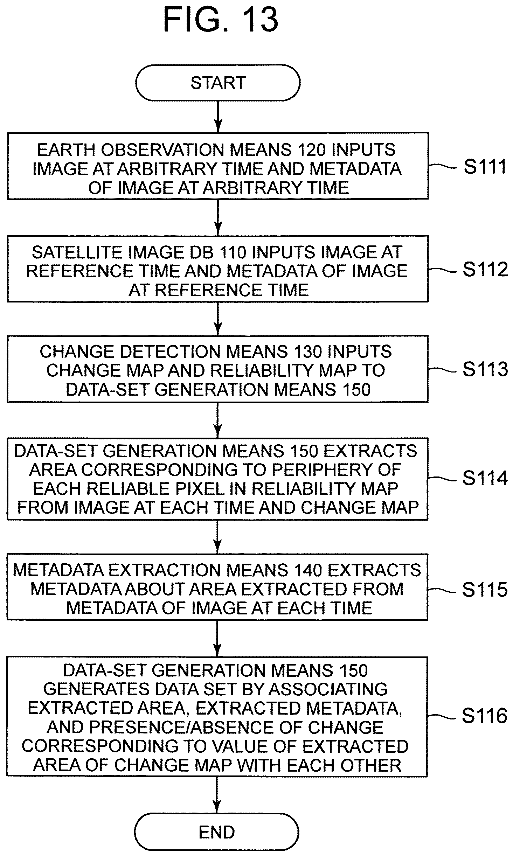

Next, the operation of generating a data set by the image processing device 100 according to the present example will be described with reference to FIG. 13. FIG. 13 is a flowchart showing the operation of a data set generation process by the image processing device 100 according to the first example.

First, the earth observation means 120 inputs the image photographed at the arbitrary time to the data-set generation means 150. The earth observation means 120 further inputs the metadata of the image photographed at the arbitrary time to the metadata extraction means 140 (step S111).

Then, the satellite image DB 110 inputs the image photographed at the reference time to the data-set generation means 150. The satellite image DB 110 further inputs the metadata of the image photographed at the reference time to the metadata extraction means 140 (step S112).

Then, the change detection means 130 inputs the generated change map and reliability map to the data-set generation means 150 (step S113).

Then, the data-set generation means 150 extracts an area corresponding to the periphery of each reliable pixel in the reliability map from each of the image photographed at the reference time, the image photographed at the arbitrary time, and the change map (step S114). The data-set generation means 150 inputs each extracted area to the metadata extraction means 140.

Then, the metadata extraction means 140 extracts metadata about each area extracted in step S114 from the metadata of the image photographed at the reference time and the metadata of the image photographed at the arbitrary time (step S115). The metadata extraction means 140 inputs each extracted metadata to the data-set generation means 150.

Then, the data-set generation means 150 generates a data set constituted by data in which each extracted image area, each extracted metadata, and the presence/absence of the change corresponding to the value of the extracted area of the change map are associated with each other (step S116). After generating the data set, the image processing device 100 terminates the data set generation process.

### [Description of Effects]

The image processing device 100 according to the present example includes the change detection means 130 that detects a change from images photographed at two different times and the metadata of each of the images and generates a change map and a reliability map indicating the degree of reliability for each pixel.

The image processing device 100 further includes the data-set generation means 150 that extracts an area corresponding to the periphery of a reliable pixel in the reliability map from each of the images photographed at the two different times and the change map and combines them with the metadata to generate a data set.

The change detection means 130 includes the feature-value computation means 132 that computes a feature value of a change with no unnecessary changes by limiting the range of the spectrum that changes in accordance with the conditions causing unnecessary changes using model parameters computed from the metadata about the solar zenith angle, the date and time, and the like. The unnecessary changes include changes due to sunshine conditions, changes of atmospheric conditions, and seasonal changes of forests.

The change detection means 130 further includes the change-pixel detection means 133 that detects a change pixel on the basis of the computed feature value of the change and classifies the detected change pixel, and the reliability computation means 134 that computes the reliability of the detection for each pixel.

Thus, the image processing device 100 according to the present example is capable of generating a data set required for learning a process of detecting a change only of a detection target without detecting unnecessary changes.

### Second exemplary embodiment.

### [Description of Configuration]

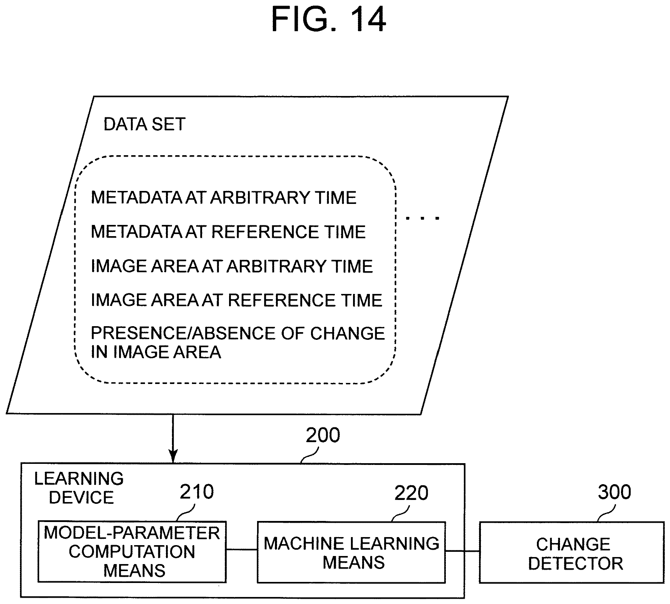

Next, a learning device according to a second exemplary embodiment of the present invention will be described with reference to the drawings. FIG. 14 is a block diagram showing a configuration example of the learning device according to the second exemplary embodiment of the present invention.

A learning device 200 according to the present exemplary embodiment causes a device to learn a process of detecting only a change other than unnecessary changes using a data set constituted by a large number of data including a set of image areas photographed at the same point at two different times, the presence/absence of a change in the image areas, and metadata about each image area.

That is, a change detector that has learned the process of detecting only a change other than unnecessary changes does not detect the unnecessary changes. The unnecessary changes include changes due to sunshine conditions, changes of atmospheric conditions, and seasonal changes of forests.

As shown in FIG. 14, the learning device 200 includes a model-parameter computation means 210 and a machine learning means 220. The learning device 200 receives a data set input from the image processing device 100 according to the first exemplary embodiment.

In addition, the learning device 200 is communicably connected to a change detector 300 as shown in FIG. 14. The change detector 300 having completed the learning detects only a change other than unnecessary changes from the images photographed at the same point at two different times.

The model-parameter computation means 210 has a function of computing a model parameter at an arbitrary time on the basis of the metadata of the image photographed at the arbitrary time in the data set and computing a model parameter at a reference time on the basis of the metadata of the image photographed at the reference time in the data set. The function of the model-parameter computation means 210 is similar to the function of the model-parameter computation means 131 in the first example.

The machine learning means 220 has a function of causing a device to learn a process of detecting only a change other than unnecessary changes using a set of image areas photographed at the same point at two different times, the presence/absence of a change in the image areas, and the model parameter about each image area.

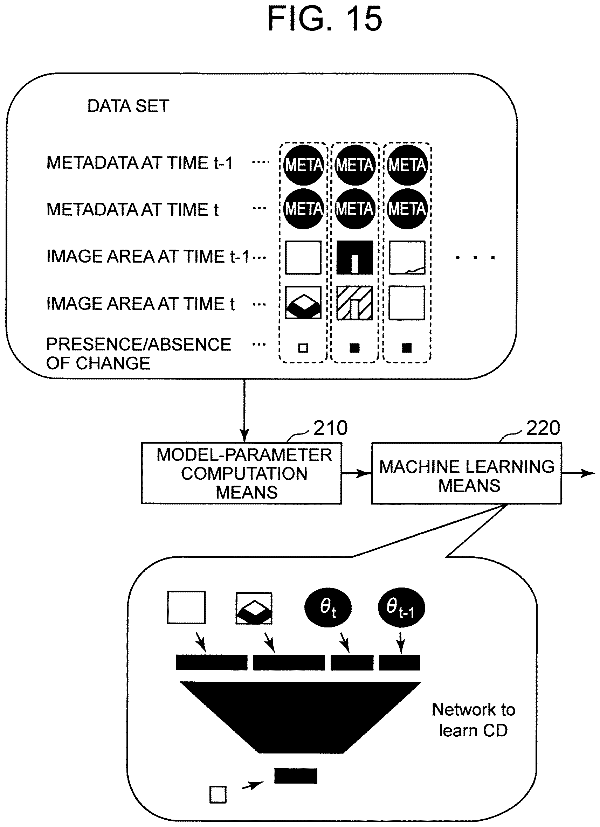

Hereinafter, an example in which the learning device 200 causes the change detector 300 to learn a change detection process will be described with reference to the drawings. FIG. 15 is an explanatory diagram showing an example in which the learning device 200 causes the change detector 300 to learn a process of detecting only a change other than unnecessary changes.

The data set shown in FIG. 15 is the same as the data set shown in FIG. 11. The model-parameter computation means 210 having received the input data set computes a model parameter on the basis of the metadata of each image. After the computation, the model-parameter computation means 210 inputs a data set including the model parameters instead of the metadata to the machine learning means 220.

The machine learning means 220 having received the input data set including the model parameters causes the change detector 300 to learn a process of detecting only a change other than unnecessary changes.

In the example shown in FIG. 15, the machine learning means 220 causes the change detector 300 to learn a process of outputting, when each of the model parameter at the time (t-1), the model parameter at the time t, the image area at the time (t-1), and the image area at the time t is input to a network constituting the change detector 300, the presence/absence of the corresponding change. The model parameter at the time (t-1) and the model parameter at the time t in the example shown in FIG. 15 are the solar zenith angle θₜ₋₁ and the solar zenith angle θₜ, respectively.

In addition, the model parameter at the time (t-1) and the model parameter at the time t may be vectors representing the state of the direct light component s_{d} and the state of the scattered light component sₛ of the sunlight spectrum shown in the upper of FIG. 8, respectively. When the two vectors shown in the upper of FIG. 8 are directly input to the machine learning means 220, the machine learning means 220 removes a periodic change and causes the change detector 300 to learn a process of detecting a change other than the periodic change.

The model parameter at the time (t-1) and the model parameter at the time t may be the vectors representing the state of the NDVI of the plant shown in the middle of FIG. 8 or the vectors representing the state of the solar azimuth angle relative to the image at the photographing time shown in the lower of FIG. 8.

In addition, the network constituting the change detector 300 may be any network as long as it is usable for machine learning such as the CNN disclosed in NPL 4, the SAE disclosed in NPL 5, the DBN disclosed in NPL 6, or the like.

The change detector 300 having learned the process of detecting only a change other than unnecessary changes detects a change only of a detection target without detecting unnecessary changes from the images photographed at the same point at two different times.

The machine learning means 220 in the present exemplary embodiment causes a detector to learn, using learning data including at least a set of image areas representing a periodic change of a predetermined object among changes between a plurality of images and a set of image areas representing a change other than the periodic change among the changes between the plurality of images, a process of detecting a change other than the periodic change among the changes between the plurality of images.

The model-parameter computation means 210 in the present exemplary embodiment computes a parameter representing the periodic change of the predetermined object on the basis of data indicating photographing conditions of the image areas included in the learning data. The machine learning means 220 causes the detector to learn using the computed parameters and the learning data.

The advantage of machine learning using the model parameters is that machine learning is facilitated. For example, when machine learning is performed with a data set with no model parameters, the data set is required to contain data related to many pattern changes. However, it is difficult to prepare a data set constituted by various types of data.

When machine learning is performed with model parameters, the learning device 200 causes the change detector 300 to refer to data about similar changes on the basis of the model parameters in order to analogize the pattern of a change although the data set does not include the pattern of the change. That is, it is possible for the user to reduce the types of data included in the data set.

### [Description of Operation]

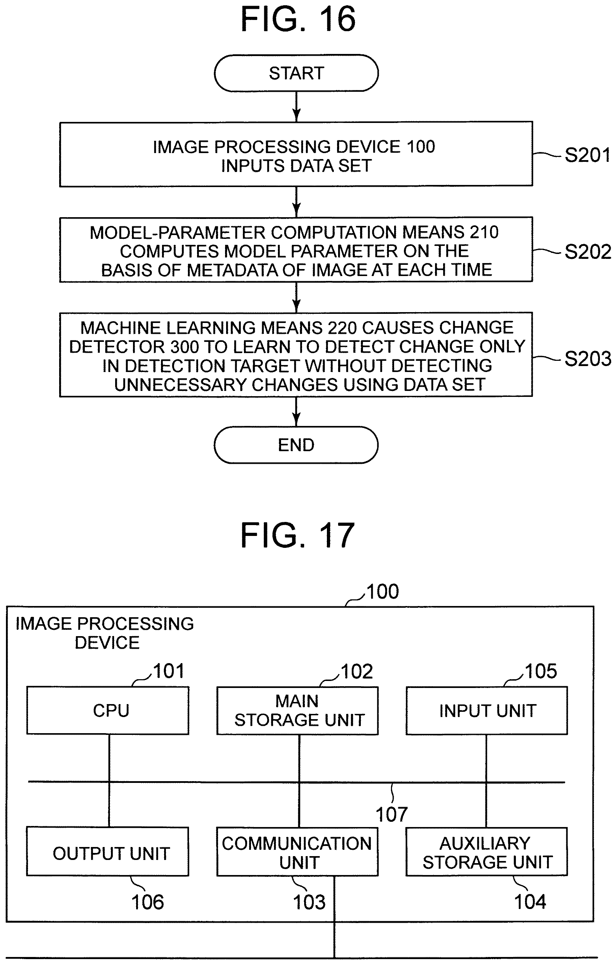

Hereinafter, the operation of the learning device 200 according to the present exemplary embodiment causing the change detector 300 to learn the change detection process will be described with reference to FIG. 16. FIG. 16 is a flowchart showing the operation of the learning process by the learning device 200 according to the second exemplary embodiment.

First, the image processing device 100 inputs the generated data set to the learning device 200 (step S201).

Then, the model-parameter computation means 210 computes a model parameter at the arbitrary time on the basis of the metadata of the image photographed at the arbitrary time. The model-parameter computation means 210 further computes a model parameter at the reference time on the basis of the metadata of the image photographed at the reference time (step S202). The model-parameter computation means 210 inputs a data set including the computed model parameters to the machine learning means 220.

Then, the machine learning means 220 causes the change detector 300 to learn a process of detecting a change only of the detection target without detecting unnecessary changes using the input data set (step S203).

Specifically, the machine learning means 220 causes the change detector 300 to learn a process of detecting a change only of the detection target without detecting unnecessary changes, such as a change of the position of a shadow, a change of the state of clouds, a seasonal change of plants, and the like, using the data set. After the learning, the learning device 200 terminates the learning process.

### [Description of Effects]

The learning device 200 according to the present exemplary embodiment includes the machine learning means 220 that causes a device to learn a process of detecting a change only of a detection target without detecting unnecessary changes using data including a set of image areas photographed at the same point at two different times, the presence/absence of a change in the image areas, and model parameters at the observation time of each image area. The unnecessary changes include changes due to sunshine conditions, changes of atmospheric conditions, and seasonal changes of forests.

Thus, the learning device 200 according to the present exemplary embodiment is capable of causing the change detector 300 to learn a process of detecting a change only of the detection target without detecting unnecessary changes. The change detector 300 having learned is capable of detecting a change only of the detection target among changes between a plurality of images with different photographing times.

Note that, the image processing device 100 according to the first example and the learning device 200 according to the second exemplary embodiment may be used independently or may be used in the same system.

Hereinafter, a specific example of a hardware configuration of the image processing device 100 according to the first example and a specific example of a hardware configuration of the learning device 200 according to the second exemplary embodiment will be described.

FIG. 17 is an explanatory diagram showing a hardware configuration example of the image processing device 100 according to the first example. The image processing device 100 shown in FIG. 17 includes a central processing unit (CPU) 101, a main storage unit 102, a communication unit 103, and an auxiliary storage unit 104. The image processing device 100 may further include an input unit 105 for the user to operate and an output unit 106 for presenting a processing result or the progress of the processing content to the user.

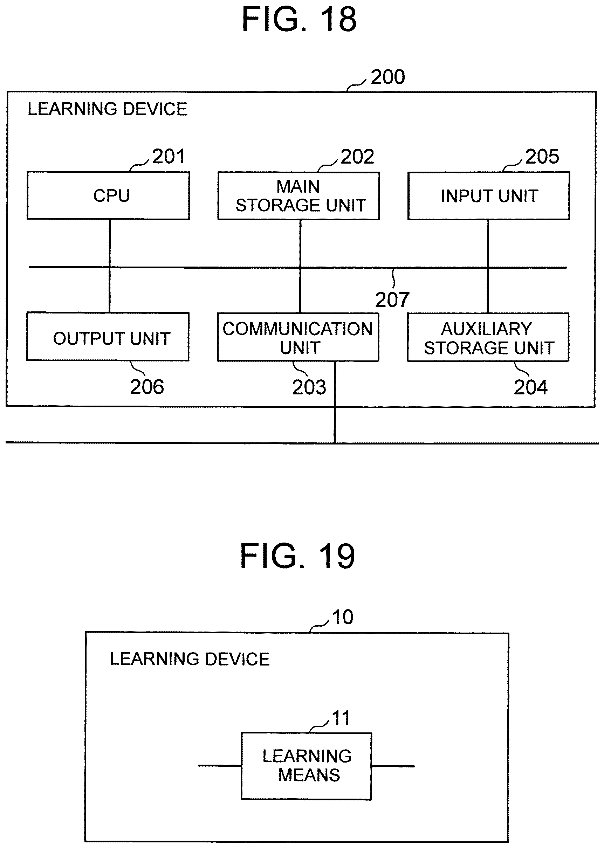

FIG. 18 is an explanatory diagram showing a hardware configuration example of the learning device 200 according to the present invention. The learning device 200 shown in FIG. 18 includes a CPU 201, a main storage unit 202, a communication unit 203, and an auxiliary storage unit 204. The learning device 200 may further include an input unit 205 for the user to operate and an output unit 206 for presenting a processing result or the progress of the processing content to the user.

Each of the main storage unit 102 and the main storage unit 202 is used as a work region of data and a temporary save region of data. Each of the main storage unit 102 and the main storage unit 202 is, for example, a random access memory (RAM).

Each of the communication unit 103 and the communication unit 203 has a function of inputting and outputting data to and from peripheral devices via a wired network or a wireless network (information communication network).

Each of the auxiliary storage unit 104 and the auxiliary storage unit 204 is a non-transitory tangible storage medium. The non-transitory tangible storage medium is, for example, a magnetic disk, a magneto-optical disk, a compact disk read only memory (CD-ROM), a digital versatile disk read only memory (DVD-ROM), or a semiconductor memory.

Each of the input unit 105 and the input unit 205 has a function of inputting data and processing instructions. Each of the input unit 105 and the input unit 205 is an input device, such as a keyboard or a mouse.

Each of the output unit 106 and the output unit 206 has a function of outputting data. Each of the output unit 106 and the output unit 206 is, for example, a display device, such as a liquid crystal display device, or a printing device, such as a printer.

In addition, as shown in FIG. 17, the constituent elements of the image processing device 100 are connected to a system bus 107. In addition, as shown in FIG. 18, the constituent elements of the learning device 200 are connected to a system bus 207.

The auxiliary storage unit 104 stores, for example, a program for implementing the earth observation means 120, the change detection means 130, the metadata extraction means 140, and the data-set generation means 150 shown in FIG. 5. The main storage unit 102 is used, for example, as a storage region of the satellite image DB 110.

Note that, the image processing device 100 may be implemented by hardware. For example, the image processing device 100 may have a circuit including a hardware component such as a large scale integration (LSI) incorporating a program for implementing the functions as shown in FIG. 5.

The image processing device 100 may be implemented by software by executing, by the CPU 101 shown in FIG. 17, the program which provides the functions of constituent elements shown in FIG. 5.

In the case of being implemented by software, the CPU 101 loads the program stored in the auxiliary storage unit 104 in the main storage unit 102 and executes the program to control the operation of the image processing device 100, whereby the functions are implemented by software.

The auxiliary storage unit 204 stores, for example, a program for implementing the model-parameter computation means 210 and the machine learning means 220 shown in FIG. 14.

Note that, the learning device 200 may be implemented by hardware. For example, the learning device 200 may have a circuit including a hardware component such as an LSI incorporating a program for implementing the functions as shown in FIG. 14.

The learning device 200 may be implemented by software by executing, by the CPU 201 shown in FIG. 18, the program which provides the functions of constituent elements shown in FIG. 14.

In the case of being implemented by software, the CPU 201 loads the program stored in the auxiliary storage unit 204 in the main storage unit 202 and executes the program to control the operation of the learning device 200, whereby the functions are implemented by software.

In addition, a part of or all of the constituent elements may be implemented by a general purpose circuitry, a dedicated circuitry, a processor, or the like, or a combination thereof. These may be constituted by a single chip, or by a plurality of chips connected via a bus. A part of or all of the constituent elements may be implemented by a combination of the above circuitry or the like and a program.

In the case in which a part of or all of the constituent elements are implemented by a plurality of information processing devices, circuitries, or the like, the information processing devices, circuitries, or the like may be arranged in a concentrated manner, or dispersedly. For example, the information processing devices, circuitries, or the like may be implemented as a form in which each is connected via a communication network, such as a client-and-server system or a cloud computing system.

Next, an outline of the present invention will be described. FIG. 19 is a block diagram showing an outline of the learning device according to the present invention. A learning device 10 according to the present invention includes a learning means 11 (for example, the machine learning means 220) that, by using learning data including at least a set of image areas representing a periodic change of a predetermined object among changes between a plurality of images and a set of image areas representing a change other than the periodic change among the changes between the plurality of images, causes a detector to learn a process for detecting a change other than the periodic change among the changes between the plurality of images.

When a learning device having such a configuration is used, a change only of a detection target is detected among changes between a plurality of images with different photographing times.

The learning device 10 further includes a computation means (for example, the model-parameter computation means 210) that computes a parameter representing the periodic change of the predetermined object on the basis of data indicating photographing conditions of the image areas included in the learning data, and the learning means 11 may cause the detector to learn using the computed parameter and the learning data.

When a learning device having such a configuration is used, a periodic change of a predetermined object is expressed more concretely.

Alternatively, the parameter may be a solar zenith angle. Alternatively, the parameter may be a direct light component of the sunlight spectrum and a scattered light component of the sunlight spectrum.

When a learning device having such a configuration is used, a change of the length of a shadow is excluded from a detection target among changes between a plurality of images.

Alternatively, the parameter may be a vegetation index.

When a learning device having such a configuration is used, a seasonal change of plants is excluded from a detection target among changes between a plurality of images.

Alternatively, the parameter may be a solar azimuth angle.

When a learning device having such a configuration is used, a change of the direction in which a shadow is formed is excluded from a detection target among changes between a plurality of images.

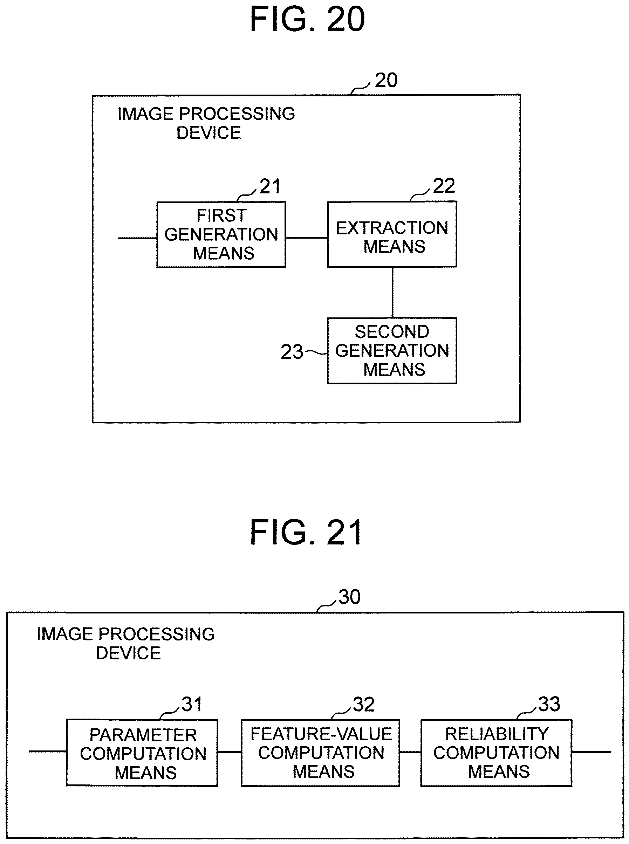

FIG. 20 is a block diagram showing an outline of the image processing device according to the first example. An image processing device 20 according to the present example includes a first generation means 21 (for example, the change detection means 130) that generates change information indicating, for each pixel constituting an image, a plurality of feature values indicating the degree of a change in which a periodic change of a predetermined object is removed from changes between a plurality of images, and reliability information indicating, for each pixel, reliability of each of the plurality of feature values, an extraction means 22 (for example, the data-set generation means 150) that extracts, from the plurality of images, an area including a pixel corresponding to a feature value whose reliability indicated by the generated reliability information is equal to or greater than a predetermined value and extracts, from the generated change information, a feature value equal to or greater than the predetermined value, and a second generation means 23 (for example, the data-set generation means 150) that generates learning data including each extracted area, the extracted feature value equal to or greater than the predetermined value, and data indicating a photographing condition of each of the plurality of images associated with each other.

When an image processing device having such a configuration is used, a change only of a detection target is detected among changes between a plurality of images with different photographing times.

FIG. 21 is a block diagram showing another outline of the image processing device according to the first example. An image processing device 30 according to the present example includes a parameter computation means 31 (for example, the model-parameter computation means 131) that computes, on the basis of data indicating a photographing condition of each of a plurality of images, a parameter representing a periodic change of a predetermined object displayed in the plurality of images, a feature-value computation means 32 (for example, the feature-value computation means 132) that computes, using the computed parameter and the plurality of images, a feature value indicating the degree of a change in which the periodic change is removed from changes between the plurality of images, and a reliability computation means 33 (for example, the reliability computation means 134) that computes reliability of the computed feature value.

When an image processing device having such a configuration is used, a change only of a detection target is detected among changes between a plurality of images with different photographing times.

The present invention has been described with reference to the exemplary embodiments and examples, but is not limited to the above exemplary embodiments and examples. Various changes that can be understood by those skilled in the art within the scope of the present invention defined by the claims can be made to the configurations and details of the present invention.

### Reference Signs List

10, 200 Learning device
11 Learning means
20, 30, 100, 910, 920 Image processing device
21 First generation means
22 Extraction means
23 Second generation means
31 Parameter computation means
32, 132, 913, 921 Feature-value computation means
33, 134 Reliability computation means
99, 130 Change detection means
101, 201CPU
102, 202Main storage unit
103, 203 Communication unit
104, 204Auxiliary storage unit
105, 205Input unit
106, 206Output unit
107, 207System bus
110 Satellite image database
120 Earth observation means
131, 210Model-parameter computation means
133, 914, 922 Change-pixel detection means
140 Metadata extraction means
150 Data-set generation means
220 Machine learning means
300 Change detector
911 First correction means
912 Second correction means
923 Unnecessary-change-area detection means
924 Unnecessary-change removal means

## Claims

1. A learning device comprising:
a learning means (220) configured to, by using learning data including at least a set of image areas representing a periodic change of shadow or plants among changes between a plurality of satellite images photographed at the same point at different times and a set of image areas representing a change other than the periodic change among the changes between the plurality of satellite images, cause a detector (300) to learn a process for detecting a change other than the periodic change among the changes between the plurality of satellite images; and
**characterised by**:
a computation means (210) configured to compute a parameter representing the periodic change of shadow or plants on the basis of data indicating photographing conditions of the image areas included in the learning data, wherein
the learning means (220) is configured to cause the detector (300) to learn using the computed parameter and the learning data.

2. The learning device according to claim 1, wherein
the parameter representing the periodic change of shadow is a solar zenith angle.

3. The learning device according to claim 1 or 2, wherein
the parameter representing the periodic change of shadow is a direct light component of a sunlight spectrum and a scattered light component of the sunlight spectrum.

4. The learning device according to any one of claims 1 to 3, wherein
the parameter representing the periodic change of shadow is a solar azimuth angle.

5. The learning device according to claim 1, wherein
the parameter representing the periodic change of plants is a vegetation index.

6. A computer-implemented learning method comprising:
causing, by using learning data including at least a set of image areas representing a periodic change of shadow or plants among changes between a plurality of satellite images photographed at the same point at different times and a set of image areas representing a change other than the periodic change among the changes between the plurality of satellite images, a detector (300) to learn a process for detecting a change other than the periodic change among the changes between the plurality of satellite images;
**characterised by**:
computing a parameter representing the periodic change of the shadow or plants on the basis of data indicating photographing conditions of the image areas included in the learning data; and
causing the detector (300) to learn using the computed parameter and the learning data.

7. A learning program causing a computer to execute the method according to claim 6.

## Patentansprüche

1. Lernvorrichtung, umfassend:
eine Lerneinrichtung (220), die konfiguriert ist, um durch Verwenden von Lerndaten einschließlich wenigstens einer Gruppe von Bildbereichen, die eine periodische Änderung von Schatten oder Pflanzen unter Änderungen zwischen einer Vielzahl von an derselben Stelle zu unterschiedlichen Zeiten fotografierten Satellitenbildern darstellen, und einer Gruppe von Bildbereichen, die eine Änderung, die eine andere ist als die periodische Änderung ist, unter den Änderungen zwischen der Vielzahl von Satellitenbildern darstellen, zu veranlassen, dass ein Detektor (300) einen Prozess zum Detektieren einer Änderung, die eine andere als die periodische Änderung ist, unter den Änderungen zwischen der Vielzahl von Satellitenbildern zu lernen, und
**gekennzeichnet durch**:
eine Berechnungseinrichtung (210), die konfiguriert ist, um einen Parameter, der die periodische Änderung von Schatten oder Pflanzen darstellt, auf der Basis von Daten zu berechnen, die Fotografierbedingungen der in den Lerndaten enthaltenen Bildbereiche anzeigen, wobei
die Lerneinrichtung (220) konfiguriert ist, um zu veranlassen, dass der Detektor (300) unter Verwendung des berechneten Parameters und der Lerndaten lernt.

2. Lernvorrichtung nach Anspruch 1, wobei
der Parameter, der die periodische Änderung von Schatten darstellt, ein Sonnenzenitwinkel ist.

3. Lernvorrichtung nach Anspruch 1 oder 2, wobei
der Parameter, der die periodische Änderung von Schatten darstellt, eine Direktlichtkomponente eines Sonnenlichtspektrums und eine Streulichtkomponente des Sonnenlichtspektrums ist.

4. Lernvorrichtung nach einem der Ansprüche 1 bis 3, wobei
der Parameter, der die periodische Änderung von Schatten darstellt, ein Sonnenazimutwinkel ist.

5. Lernvorrichtung nach Anspruch 1, wobei
der Parameter, der die periodische Änderung von Pflanzen darstellt, ein Vegetationsindex ist.

6. Computerimplementiertes Lernverfahren, umfassend:
Veranlassen, durch Verwenden von Lerndaten einschließlich wenigstens einer Gruppe von Bildbereichen, die eine periodische Änderung von Schatten oder Pflanzen unter Änderungen zwischen einer Vielzahl von an derselben Stelle zu unterschiedlichen Zeiten fotografierten Satellitenbildern darstellen, und einer Gruppe von Bildbereichen, die eine Änderung, die eine andere ist als die periodische Änderung ist, unter den Änderungen zwischen der Vielzahl von Satellitenbildern darstellen, dass ein Detektor (300) einen Prozess zum Detektieren einer Änderung, die eine andere ist als die periodische Änderung ist, unter Änderungen zwischen der Vielzahl von Satellitenbildern lernt;
**gekennzeichnet durch**:
Berechnen eines Parameters, der die periodische Änderung des Schattens oder der Pflanzen darstellt, auf der Basis von Daten, die Fotografierbedingungen der in den Lerndaten enthaltenen Bildbereiche anzeigen; und
Veranlassen, dass der Detektor (300) unter Verwendung des berechneten Parameters und der Lerndaten lernt.

7. Lernprogramm, das veranlasst, dass ein Computer das Verfahren nach Anspruch 6 ausführt.

## Revendications

1. Dispositif d'apprentissage comprenant :
un moyen d'apprentissage (220) configuré pour, à l'aide de données d'apprentissage comportant au moins un ensemble de zones d'image représentant un changement périodique d'ombre ou de végétaux parmi des changements entre une pluralité d'images satellites photographiées au même point à différents instants et un ensemble de zones d'image représentant un changement autre que le changement périodique parmi les changements entre la pluralité d'images satellites, amener un détecteur (300) à apprendre un processus de détection d'un changement autre que le changement périodique parmi les changements entre la pluralité d'images satellites ; et
**caractérisé par** :
un moyen de calcul (210) configuré pour calculer un paramètre représentant le changement périodique d'ombre ou de végétaux sur la base de données indiquant des conditions photographiques des zones d'image comprises dans les données d'apprentissage, dans lequel
le moyen d'apprentissage (220) est configuré pour amener le détecteur (300) à apprendre à l'aide du paramètre calculé et des données d'apprentissage.

2. Dispositif d'apprentissage selon la revendication 1, dans lequel
le paramètre représentant le changement périodique d'ombre est un angle du zénith solaire.

3. Dispositif d'apprentissage selon la revendication 1 ou 2, dans lequel
le paramètre représentant le changement périodique d'ombre est une composante de lumière directe d'un spectre de lumière solaire et une composante de lumière diffusée du spectre de lumière solaire.

4. Dispositif d'apprentissage selon l'une quelconque des revendications 1 à 3, dans lequel
le paramètre représentant le changement périodique d'ombre est un angle d'azimut solaire.

5. Dispositif d'apprentissage selon la revendication 1, dans lequel
le paramètre représentant le changement périodique de végétaux est un indice de végétation.

6. Procédé d'apprentissage mis en oeuvre par ordinateur comprenant :
le fait d'amener, à l'aide de données d'apprentissage comportant au moins un ensemble de zones d'image représentant un changement périodique d'ombre ou de végétaux parmi des changements entre une pluralité d'images satellites photographiées au même point à différents instants et un ensemble de zones d'image représentant un changement autre que le changement périodique parmi les changements entre la pluralité d'images satellites, un détecteur (300) à apprendre un processus de détection d'un changement autre que le changement périodique parmi les changements entre la pluralité d'images satellites ;
**caractérisé par** :
le calcul d'un paramètre représentant le changement périodique d'ombre ou de végétaux sur la base de données indiquant des conditions photographiques des zones d'image comprises dans les données d'apprentissage ; et
le fait d'amener le détecteur (300) à apprendre à l'aide du paramètre calculé et des données d'apprentissage.

7. Programme d'apprentissage amenant un ordinateur à exécuter le procédé selon la revendication 6.
